# EUROPÄISCHE PATENTSCHRIFT

(11) **EP 2 015 442 B1**
(45) Veröffentlichungstag und Bekanntmachung des Hinweises auf die Patenterteilung: **15.04.2020**
(21) Anmeldenummer: 08104360.6
(22) Anmeldetag: 11.06.2008
(51) Int. Cl.: H02P 21/00, H02P 21/22, H02P 25/03

(54) **Vorrichtung zum Betreiben einer Synchronmaschine**
Device for operating a synchronous machine
Dispositif destiné au fonctionnement d'une machine synchrone

(30) Priorität: 13.07.2007 DE 102007033145
(43) Veröffentlichungstag der Anmeldung: 14.01.2009
(73) Patentinhaber: Continental Automotive GmbH, 30165 Hannover (DE)
(72) Erfinder: Hexamer, Bernd, 55566 Meddersheim (DE)

(56) Entgegenhaltungen:
- EP-A1- 0 840 441
- EP-A2- 1 317 060
- US-A1- 2007 107 973
- US-B1- 6 965 212

## Beschreibung

Die Erfindung betrifft eine Vorrichtung zum Betreiben einer Synchronmaschine mit einem Stator, dem drei Wicklungsstränge zugeordnet sind, und einem Rotor. Synchronmaschinen finden Einsatz im Bereich der Automobiltechnik, wo sie beispielsweise für Lenksysteme von Kraftfahrzeugen eingesetzt werden. Synchronmaschinen können mit Permanentmagneten auf dem Rotor ausgestattet sein. Sie können jedoch auch mit Erregerwicklungen in dem Rotor ausgestattet sein. Synchronmaschinen können als Schenkelpolmaschinen ausgebildet sein, bei denen der Rotor ein Polrad hat mit ausgeprägten Polen. Die Synchronmaschine kann jedoch auch als Vollpolmaschine mit einem rotationssymmetrisch ausgebildeten Rotor ausgebildet sein.

Aus dem Fachbuch "Control of Electrical Drives", Leonhard, W. zweite Auflage, Berlin, Heidelberg, New York: Springer-Verlag 1996, Seiten 309 bis 317 ist eine Steuerung für eine Synchronmaschine mit Permanentmagneten bekannt. Die Synchronmaschine wird mittels einer feldorientierten Stromregelung gesteuert. Dazu werden Transformationen der Ströme und Spannungen in ein mit dem Rotor umlaufendes Koordinatensystem, ein d,q-Koordinatensystem, gemacht. In diesem Zusammenhang wird eine Feldschwächung des Magnetfeldes der Permanentmagneten zur Drehzahlerhöhung über eine Nenndrehzahl der Synchronmaschine hinaus anhand eines eingeprägten negativen d-Stromes erwähnt, der einem magnetfeldbildenden Strom des rotorumlaufenden Koordinatensystems zugeordnet werden kann.

US20070107973A1 zeigt eine Vorrichtung zum Betreiben einer Synchronmaschine mit einem Stator, dem drei Wicklungsstränge zugeordnet sind und einem Rotor. Die Vorrichtung wird für eine Servolenkung eingesetzt.

Die Aufgabe, die der Erfindung zugrunde liegt, ist es, eine Vorrichtung zum Betreiben einer Synchronmaschine zu schaffen, die einfach und kostengünstig ist.

Die Aufgabe wird gelöst durch die Merkmale des unabhängigen Patentanspruchs. Vorteilhafte Ausgestaltungen der Erfindung sind in den Unteransprüchen gekennzeichnet.

Die Erfindung zeichnet sich aus durch eine Vorrichtung zum Betreiben einer Synchronmaschine mit einem Stator, dem drei Wicklungsstränge zugeordnet sind, und einem Rotor, wobei die Vorrichtung ausgebildet ist, einen Sollwert eines magnetfeldbildenden Stroms in einem mit dem Rotor der Synchronmaschine umlaufenden Koordinatensystem abhängig von einer magnetfeldbildenden Rohsollstromkomponente des rotorumlaufenden Koordinatensystems und einer magnetfeldbildenden Stromgrenze des rotorumlaufenden Koordinatensystems zu ermitteln und zwar derart, dass der Sollwert des magnetfeldbildenden Stroms auf die magnetfeldbildende Stromgrenze begrenzt wird, wobei die magnetfeldbildende Stromgrenze betragsmäßig unter einer für die Synchronmaschine im Feldschwächbetrieb typischen Kippgrenze liegt. Ferner ist die Vorrichtung dazu ausgebildet, eine drehmomentbildende Stromgrenze des rotorumlaufenden Koordinatensystems im Bereich der Begrenzung des Sollwerts des magnetfeldbildenden Stroms abhängig von der magnetfeldbildenden Rohsollstromkomponente und der magnetfeldbildenden Stromgrenze betragsmäßig zu reduzieren. Der Sollwert des magnetfeldbildenden Stroms und die magnetfeldbildende Stromgrenze sind für einen Feldschwächbetrieb der Synchronmaschine typischerweise negativ ausgebildet. Durch den Feldschwächbetrieb kann die Drehzahl über die Nenndrehzahl der Synchronmaschine erhöht werden. Ferner wird die magnetfeldbildende Stromgrenze bevorzugt in der Art vorgegeben, dass sie betragsmäßig unter einer für die Synchronmaschine im Feldschwächbetrieb typischen Kippgrenze liegt. Die Kippgrenze berechnet sich aus den allgemeinen Beziehungen der permanenterregten Synchronmaschine in Abhängigkeit von dem Sollwert des magnetfeldbildenden Stroms und repräsentiert somit auch eine Stabilitätsgrenze für den Feldschwächbetrieb. Durch die betragsmäßige Reduktion der drehmomentbildenden Stromgrenze kann im Bereich der Begrenzung des Sollwerts des magnetfeldbildenden Stroms besonders vorteilhaft ein für den Feldschwächbetrieb typischer Stromgrenzbetrieb eines Stellglieds zur Ansteuerung der Synchronmaschine wieder verlassen werden und somit der Strombedarf deutlich verbessert werden. Dadurch wird ein besonders effizienter und kostengünstiger Betrieb der Synchronmaschine sichergestellt.

Gemäß der Erfindung umfasst die Vorrichtung einen ersten Regler, der dazu ausgebildet ist, abhängig von einem Sollwert einer magnetfeldbildenden Spannung des rotorumlaufenden Koordinatensystems und einem Sollwert einer drehmomentbildenden Spannung des rotorumlaufenden Koordinatensystems eine magnetfeldbildende Zwischenrohsollstromkomponente zu ermitteln, abhängig von der die magnetfeldbildende Rohsollstromkomponente ermittelt wird. Der erste Regler ist dabei bevorzugt in der Art ausgebildet, dass die magnetfeldbildende Zwischenrohsollstromkomponente im Feldschwächbetrieb der Synchronmaschine ermittelt wird. Dadurch ist besonders vorteilhaft sichergestellt, dass der Sollwert des magnetfeldbildenden Stroms nur ermittelt wird, wenn ein Feldschwächbetrieb und somit eine Erhöhung der Drehzahl der Synchronmaschine über die Nenndrehzahl angefordert wird.

Gemäß einer vorteilhaften Ausgestaltung umfasst die Vorrichtung eine Filtereinheit, die dazu ausgebildet ist, abhängig von der Zwischenrohsollstromkomponente, die magnetfeldbildenden Rohsollstromkomponente zu ermitteln und zwar im Sinne einer Tiefpassfilterung. Durch die Tiefpassfilterung kann die Zwischenrohsollstromkomponente besonders sicher vorgefiltert werden.

Gemäß einer weiteren vorteilhaften Ausgestaltung umfasst die Vorrichtung eine zweite Begrenzungseinheit, die dazu ausgebildet ist, den Sollwert des magnetfeldbildenden Stroms auf die magnetfeldbildende Stromgrenze zu begrenzen. Die magnetfeldbildende Stromgrenze ist bevorzugt in der Art ausgebildet, dass sie betragsmäßig unter der Kippgrenze und somit unter der Stabilitätsgrenze liegt, so dass ein aus der Regelungsinstabilität resultierender betragsmäßiger Anstieg des magnetfeldbildenden Stroms, der bei einem Überschreiten der Kippgrenze typisch wäre, besonders sicher verhindert wird und einen besonders effizienten und kostengünstigen Betrieb der Synchronmaschine gewährleistet.

Gemäß einer weiteren vorteilhaften Ausgestaltung umfasst die Vorrichtung einen zweiten Regler, der dazu ausgebildet ist, abhängig von der magnetfeldbildenden Stromgrenze und der magnetfeldbildenden Rohsollstromkomponente eine drehmomentbildende Hilfsstromkomponente zu ermitteln. Dadurch kann besonders geeignet ein Betrieb der Synchronmaschine mit einem hohen Wirkungsgrad gewährleistet werden.

Der zweite Regler ermittelt in einer bevorzugten Ausbildung nur dann die drehmomentbildende Hilfsstromkomponente, wenn die magnetfeldbildende Rohsollstromkomponente die magnetfeldbildende Stromgrenze betragsmäßig überschreitet. Andernfalls kann beispielsweise für die drehmomentbildende Hilfsstromkomponente eine 0 vorgegeben werden.

Gemäß einer weiteren vorteilhaften Ausgestaltung ist der zweite Regler als PI-Regler ausgebildet. Der PI-Regler gewährleistet eine besonders geeignete Ermittlung der drehmomentbildenden Hilfsstromkomponente.

Gemäß einer weiteren vorteilhaften Ausgestaltung ist der zweite Regler als Funktionseinheit ausgebildet, die die drehmomentbildende Hilfsstromkomponente im Sinne einer tabellarischen Ermittlung ermittelt. Dadurch kann eine besonders kostengünstige Ermittlung der drehmomentbildenden Hilfsstromkomponente gewährleistet werden.

Gemäß einer weiteren vorteilhaften Ausgestaltung ist der erste Regler als PI-Regler ausgebildet und umfasst einen Eingang für die magnetfeldbildende Stromgrenze und einen Eingang für die drehmomentbildende Hilfsstromkomponente, wobei der PI-Regler derart ausgebildet ist, abhängig von der magnetfeldbildenden Stromgrenze und der drehmomentbildenden Hilfsstromkomponente einen gerade gültigen Integralanteil des PI-Reglers konstant zu halten. Somit kann der Sollwert des magnetfeldbildenden Stroms im Bereich der magnetfeldbildenden Stromgrenze in einer bevorzugten Ausbildung des PI-Reglers den gerade gültigen Integralanteil konstant halten, um eine weitere unvorteilhafte Erhöhung der magnetfeldbildenden Rohsollstromkomponente besonders geeignet zu unterdrücken. Desweiteren kann der Ausgang des PI-Reglers im Sinne eines Anti-Windup Mechanismus besonders geeignet begrenzt werden.

Gemäß einer weiteren vorteilhaften Ausgestaltung umfasst die Vorrichtung eine erste Berechnungseinheit, die dazu ausgebildet ist, abhängig von dem Sollwert zur Ansteuerung der Synchronmaschine des magnetfeldbildenden Stroms und einem vorgegebenen maximalen absoluten Strom, der den betragsmäßig maximalen Strom eines Stellglieds repräsentiert, einen drehmomentbildenden Rohstromgrenzwert zu ermitteln. Abhängig vom Anstieg des magnetfeldbildenden Stroms wird der drehmomentbildende Rohstromgrenzwert in der Art ermittelt, dass das Stellglied strommäßig nicht überlastet wird und somit ein besonders sicherer Betrieb des Stellglieds zur Ansteuerung der Synchronmaschine gewährleistet wird.

Gemäß einer weiteren vorteilhaften Ausgestaltung umfasst die Vorrichtung eine zweite Berechnungseinheit, die dazu ausgebildet ist, abhängig von dem drehmomentbildenden Rohstromgrenzwert und der drehmomentbildenden Hilfsstromkomponente die drehmomentbildende Stromgrenze zu ermitteln. Die zweite Berechnungseinheit kann derart ausgebildet sein, dass die drehmomentbildende Stromgrenze betragsmäßig derart reduziert wird, dass der durch den Feldschwächbetrieb typische Stromgrenzbetrieb des Stellglieds zur Ansteuerung der Synchronmaschine verlassen wird und ein besonders effizienter und kostengünstiger Betrieb der Synchronmaschine gewährleistet wird.

Ausführungsbeispiele der Erfindung sind im Folgenden anhand der schematischen Zeichnungen näher erläutert. Es zeigen:
- Figur 1: eine Schaltungsanordnung zum Betreiben einer Synchronmaschine,
- Figur 2: mathematische Beziehungen,
- Figur 3: eine Schaltungsanordnung gemäß Figur 1 mit einer detaillierteren Darstellung der Vorrichtung zum Betreiben der Synchronmaschine,
- Figur 4: eine Darstellung eines gemessenen Verlaufes eines Stromes über der Drehzahl der Synchronmaschine.

Elemente gleicher Konstruktion oder Funktion sind figurenübergreifend mit dem gleichen Bezugszeichen gekennzeichnet.

Eine Synchronmaschine PMSM umfasst einen Stator mit drei Wicklungssträngen, die jeweils resultierend um 120 Grad versetzt angeordnet sind. Die Synchronmaschine PMSM umfasst ferner einen Rotor, auf dem Permanentmagnete angeordnet sind. Der Rotor mit den Permanentmagneten kann rotationssymmetrisch (Vollpolläufer) oder mit ausgeprägten Polen (Schenkelpolläufer) ausgebildet sein. Der Stator umfasst ein dreiphasiges symmetrisches Wicklungssystem.

Ein Positionssensor POS ist vorgesehen, mittels dessen ein Winkel des Polrads bezogen auf eine vorgegebene Bezugsmarke auf dem Stator erfasst werden kann. Das Messsignal des Positionssensors ist einem Block B1 zugeführt, der eine Signalverarbeitungseinheit umfasst und aus dem Messsignal des Positionssensors den Drehwinkel Φ und auch eine Drehgeschwindigkeit ωₛ des Rotors relativ zu dem Stator berechnet. Der Positionsgeber kann beispielsweise als Resolver ausgebildet sein er kann jedoch auch beispielsweise ein inkrementeller Positionsgeber umfassend ein Hallelement oder dergleichen sein.

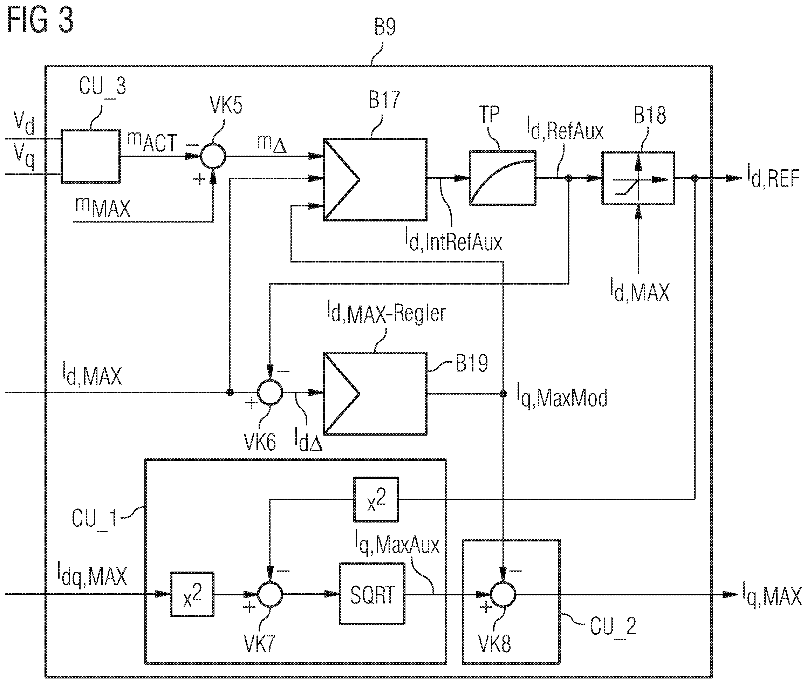

Ein Block B2 umfasst eine erste Begrenzungseinheit, die dazu ausgebildet ist, einen vorgegebenen Rohsollwert I_{q,REQ} eines drehmomentbildenden Stroms auf einen Wert einer drehmomentbildenden Stromgrenze I_{q,MAX} betragsmäßig zu begrenzen. Die drehmomentbildende Stromgrenze I_{q,MAX} wird durch eine Feldschwächungseinheit B9 vorgegeben, die anhand des Blockschaltbilds der Figur 3 näher erläutert wird.

Ein Block B3 ist vorgesehen, der eine Vorsteuerung umfasst und dem eingangsseitig die Drehgeschwindigkeit ωₛ des Rotors relativ zu dem Stator, der Drehwinkel Φ des Rotors relativ zu dem Stator und ein aus der ersten Begrenzungseinheit B2 resultierender Sollwert I_{q,REF} des drehmomentbildenden Stroms und ein Sollwert I_{d,REF} eines magnetfeldbildender Stroms zugeführt sind und der dazu ausgebildet ist Vorsteuerwerte zu ermitteln.

Unter dem magnetfeldbildenden und dem drehmomentbildenden Strom werden Motorströme der Synchronmaschine in einem mit dem Rotor umlaufenden Koordinatensystem, das als d, q-Koordinatensystem bezeichnet ist, verstanden. Dabei kennzeichnet der Buchstabe d den magnetfeldbildenden Anteil der Motorströme und der Buchstabe q den drehmomentbildenden Anteil der Motorströme.

Der Sollwert I_{q,REF} des drehmomentbildenden Stroms ist bevorzugt von einer anderen Funktionseinheit, beispielsweise der Drehmomentvorgabe eines Drehzahlreglers in einem drehzahlgeregelten Antriebssystem oder durch einen Lenkeingriff in einer Lenkung eines Kraftfahrzeugs, im Sinne eines Einstellens eines gewünschten Drehmoments der Synchronmaschine PMSM vorgegeben.

Ein erster Verknüpfungspunkt VK1 ist vorgesehen, in dem eine Differenz gebildet wird zwischen dem Sollwert I_{q,REF} des drehmomentbildenden Stroms und des einen Istwert I_{q,ACT} des drehmomentbildenden Stroms, wobei diese Differenz dann als Regeldifferenz einem Block B7 zugeführt ist, der einen q-Regler umfasst. Der q-Regler kann beispielsweise als PI-Regler ausgebildet sein. Ausgangsseitig erzeugt der q-Regler einen entsprechenden Reglerwert, der dann in einem Verknüpfungspunkt VK2 mit einem entsprechenden Vorsteuerwert der Vorsteuerung des Blocks B3 zu einem Sollwert V_{q} einer drehmomentbildenden Spannung verknüpft ist.

Ein Block B9 ist vorgesehen, der eine Feldschwächungeinheit B9 umfasst und dem eingangsseitig die aktuelle Versorgungsspannung eines Stellglieds S und die Sollwerte V_{d}, V_{q} einer magnetfeldbildenden Spannung und der drehmomentbildenden Spannung zugeführt sind. Die Ausgangsgrößen des Blocks B9 sind der Sollwert I_{d,REF} des magnetfeldbildenden Stroms und die drehmomentbildende Stromgrenze I_{q,MAX}, die in der ersten Begrenzungseinheit B2 den vorgegebenen Rohsollwert I_{q,REQ} des drehmomentbildenden Stroms betragsmäßig begrenzt.

Die genauere Ausgestaltung der Feldschwächungseinheit B9 ist weiter unten anhand des Blockschaltbilds der Figur 3 näher erläutert.

In einem Verknüpfungspunkt VK3 wird eine Differenz zwischen dem Sollwert I_{d,REF} des magnetfeldbildenden Stroms und eines Istwertes I_{d,ACT} des magnetfeldbildenden Stroms als eine Regeldifferenz für einen d-Regler eines Blocks B11 ermittelt.

Der d-Regler ist beispielsweise ebenso als PI-Regler ausgebildet, kann jedoch ebenso wie der q-Regler auch als ein anderer dem Fachmann für diesen Zweck als geeignet bekannter Regler ausgebildet sein.

Ausgangsseitig erzeugt der d-Regler einen entsprechenden Reglerwert, der in einem Verknüpfungspunkt VK4 mit einem entsprechenden Vorsteuerwert der Vorsteuerung B3 zu dem Sollwert V_{d} der magnetfeldbildenden Spannung verknüpft wird.

Ein Block B13 umfasst einen (d,q)/(r,s,t)-Transformationsblock, der ausgebildet ist zum Durchführen einer inversen Park- und Clarke-Transformation und so eine entsprechende Transformation von dem q, d-Koordinatensystem in entsprechende r, s, t-Koordinaten durchführt und so zur Vorgabe korrespondierender Leiterspannungen der Synchronmaschine dient. Das d, q-Koordinatensystem zeichnet sich dadurch aus, dass die entsprechenden transformierten Motorströme und Spannungen bei Kenntnis der exakten Drehwinkel Φ bei einem stationären Betrieb der Synchronmaschine zeitinvariant sind.

Das Stellglied S hat als Eingangsgrößen die Ausgangsgrößen des Blockes B13. Das Stellglied S umfasst bevorzugt einen Raumzeiger-Pulsweitenmodulator, der entsprechende pulsweitenmodulierte Stellsignale für einen ebenfalls in dem Stellglied S ausgebildeten Dreiphasen-Wechselrichter erzeugt. Der Dreiphasen-Wechselrichter versorgt dann die Synchronmaschine mit den gewünschten Phasenspannungen.

Ein Block B15 umfasst einen (r, s, t)/(d, q) - Transformationsblock, der ausgebildet ist zum Durchführen einer Park- und Clarke-Transformation und so eine entsprechende Transformation von r, s, t-Koordinaten in das q, d-Koordinatensystem durchführt und somit die Istwerte I_{q,ACT}, I_{d,ACT} des drehmomentbildenden und magnetfeldbildenden Stroms für die Verknüpfungspunkte VK1 und VK3 vorgibt.

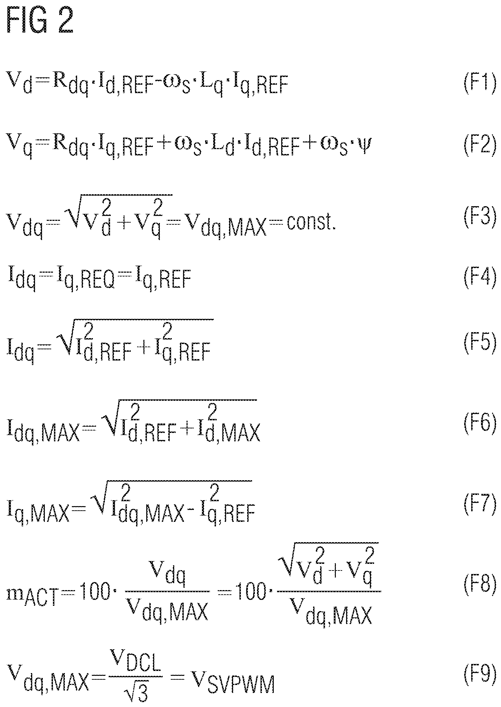

Ein Betrieb der Synchronmaschine PMSM, wie beispielsweise eine Vollpolläufermaschine oder eine Schenkelpolmaschine mit permanenterregtem Rotor wird anhand der beiden Beziehungen F1 und F2 in Figur 2 beschrieben. Dabei stellt der Sollwert V_{d} in F1 eine magnetfeldbildende Spannungskomponente und der Sollwert der Spannung V_{q} in F2 eine drehmomentbildende Spannungskomponente der Synchronmaschine dar in dem mit dem Rotor umlaufenden d, q-Koordinatensystem. Eine absolute Spannung V_{dq} ist abhängig von dem Sollwert V_{d} der magnetfeldbildenden Spannung und dem Sollwert V_{q} der drehmomentbildenden Spannung und kann durch eine Beziehung F3 in Figur 2 beschrieben werden. Die Sollwerte V_{d} und V_{q} der magnetfeldbildenden und der drehmomentbildenden Spannung sind typischerweise abhängig von dem vorgegebenen Sollwert I_{d,REF} des magnetfeldbildenden Stroms, der Drehgeschwindigkeit ωₛ des Rotors relativ zu dem Stator und dem Sollwert I_{q,REF} des drehmomentbildenden Stroms. Desweiteren umfassen die Beziehungen F1 und F2 in Figur 2 einen Widerstand R_{dq}, der einen Strangwiderstand der Synchronmaschine PMSM darstellt, und einen verketteten Magnetfluss Ψ, der den verketteten Rotormagnetfluss der Synchronmaschine PMSM darstellt. Der Term *ω_{S}*·*ψ* in der Beziehung F2 in Figur 2 entspricht der in der Statorwicklung induzierten Spannung. L_{q} und L_{d} stellen Induktivitäten in der q- bzw. d-Achse dar und sind abhängig von einer Bauform der Synchronmaschine PMSM.

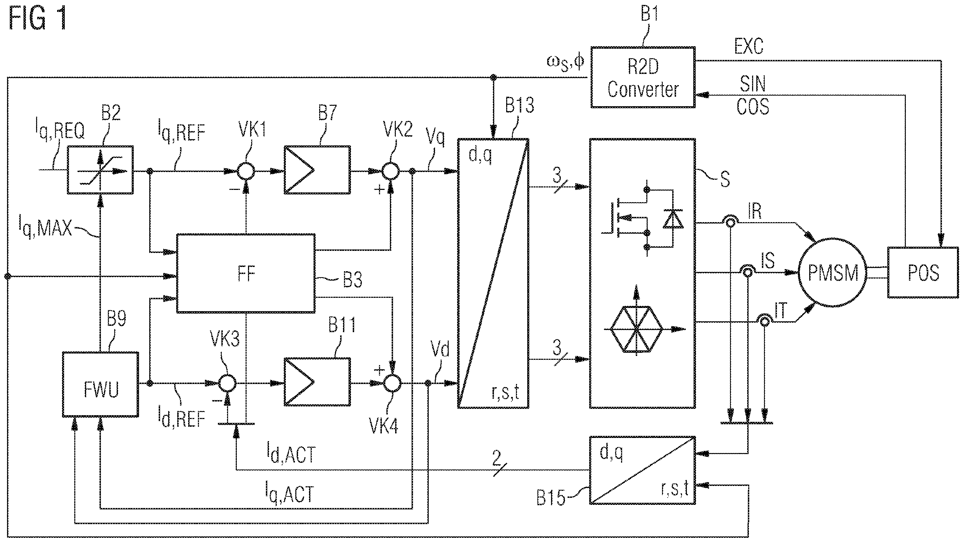

Wird die permanenterregte Synchronmaschine PMSM unterhalb oder gleich der Nenndrehzahl betrieben, wird der Sollwert des magnetfeldbildenden Stroms I_{d,REF} mittels der Feldschwächungseinheit B9 in Figur 1 mit 0 vorgegeben. In diesem Drehzahlbereich wird der vorgegebene Rohsollwert I_{q,REQ} des drehmomentbildenden Stroms durch die erste Begrenzungseinheit B2 in Figur 1 nicht begrenzt, so dass die Beziehung I_{q,REQ} = I_{q,REF} <= I_{dq,MAX} gültig ist. Ein absoluter Strom I_{dq}, der repräsentativ ist für einen Strom, den das Stellglied S der Synchronmaschine PMSM zur Verfügung stellt, wird typischerweise nach der Beziehung F4 in Figur 2 alleine durch den Sollwert I_{q,REF} des drehmomentbildenden Stroms vorgegeben.

Im Betrieb der Synchronmaschine im Bereich der Nenndrehzahl wird dem (d,q) / (r,s,t)-Transformationsblock eine maximale absolute Spannung V_{dq,MAX} durch den q- und d-Regler B7 und B11 und der Vorsteuerung B3 vorgegeben, die nach der Beziehung F3 in Figur 2 beschrieben ist.

Der absolute Strom I_{dq} wird durch die Beziehung F5 in Figur 2 beschrieben. Die maximale absolute Spannung V_{dq,MAX} und ein maximaler absoluter Strom I_{dq,MAX}, der sich entsprechend der Beziehung F6 in Figur 2 berechnet, sind repräsentativ für die maximalen Strom- und Spannungswerte, die vom Stellglieds S der Synchronmaschine zur Verfügung gestellt werden können. Die maximale absolute Spannung V_{dq,MAX} und der maximale absolute Strom I_{dq,MAX} können oder dürfen nicht überschritten werden.

Wird eine Drehzahl über der Nenndrehzahl der permanenterregten Synchronmaschine PMSM angefordert, wird mittels der Feldschwächungseinheit B9 in Figur 1 der Feldschwächbetrieb vorgegeben. Der Feldschwächbetrieb wird typischerweise durch die Beziehung F3 in Figur 2 beschrieben, in der die maximale absolute Spannung V_{dq,MAX} nicht überschritten werden darf, sondern konstant gehalten wird. Gleichzeitig muss dem Magnetfeld der Permanentmagneten des Rotors entgegengewirkt werden. Das erreicht man durch die Verwendung eines negativen Sollwertes I_{d,REF} des magnetfeldbildenden Stroms. Durch die Verwendung des negativen Sollwertes I_{d,REF} des magnetfeldbildenden Stroms, wird der Anstieg der induzierten Spannung *ω_{S}*·*ψ* im Stator in F2 in Figur 2 durch den Term *ω_{S}·L_{d}·I*_{*d*,*REF*} in F2 in Figur 2 kompensiert. Der betragsmäßige Anstieg des Sollwerts V_{d} der magnetfeldbildenden Spannung durch den negativen vorgegebenen Sollwert I_{d,REF} des magnetfeldbildenden Stroms nach der Beziehung F2 in Figur 2 wirkt sich durch eine stärkere Reduktion des Sollwerts V_{q} der drehmomentbildenden Spannung in der Beziehung F3 in Figur 2 nicht aus, so dass die maximale absolute Spannung V_{dq,MAX} konstant bleibt und somit die maximale Spannung des Stellglieds S nicht überschritten wird. Der negative Sollwert I_{d,REF} des magnetfeldbildenden Stroms wird durch die Feldschwächeinheit B9 vorgegeben und wirkt dem Magnetfeld des permanenterregten Rotors der Synchronmaschine PMSM entgegen. Der Sollwert I_{q,REF} des drehmomentbildenden Stroms und der Sollwert I_{d,REF} des magnetfeldbildenden Stroms bilden nun den absoluten Strom I_{dq} nach einer Beziehung F5 in Figur 2.

Der Sollwert I_{d,REF} des magnetfeldbildenden Stroms resultiert aus einem Modulationsindex m_{ACT} und somit den dem Modulationsindex m_{ACT} zugeordneten Sollwerten V_{q} und V_{d} der drehmomentbildenden Spannung und der magnetfeldbildenden Spannung. Der Modulationsindex m_{ACT} wird durch eine Beziehung F8 in Figur 2 beschrieben, wobei eine Beziehung F9 in Figur 2 die maximale absolute Spannung beschreibt, die der betragsmäßig maximalen Spannung des Stellglieds S zugeordnet werden kann. Der Modulationsindex kann typischerweise Werte zwischen 0 und 100% während eines stationären Betriebs der Synchronmaschine PMSM annehmen. Während eines nicht-stationären Betriebs der Synchronmaschine PMSM, wie z.B. bei einer Anforderung einer steigenden Drehzahl, insbesondere Drehzahlen über der Nenndrehzahl oder eines höheren Drehmoments, kann der Modulationsindex auch Werte über 100% annehmen.

Der maximale absolute Strom I_{dq,MAX} ergibt sich nach einer Beziehung F6 in Figur 2 und ist repräsentativ für den maximalen Strom, den das Stellglied S der Synchronmaschine PMSM zur Verfügung stellen kann. Der maximale absolute Strom I_{dq,MAX} ist eventuell auch abhängig von anderen Einflussgrößen, wie z.B. Temperatureinflüssen, etc. und wird entsprechend vorgegeben. Abhängig von dem Sollwert I_{d,REF} des magnetfeldbildenden Stroms und dem vorgegebenen maximalen absoluten Strom I_{dq,MAX} wird der Sollwert I_{q,REF} des drehmomentbildenden Stroms auf die drehmomentbildende Stromgrenze I_{q,MAX} mittels der ersten Begrenzungseinheit B2 in Figur 1 nach einer Beziehung F7 in Figur 2 begrenzt. D.h. in Abhängigkeit des Sollwerts I_{d,REF} des magnetfeldbildenden Stroms wird der betragsmäßig maximal mögliche Sollwert I_{q,REF} des drehmomentbildenden Stroms betragsmäßig reduziert auf die drehmomentbildende Stromgrenze I_{q,MAX} unter Berücksichtigung des maximalen Stroms des Stellglieds S.

Neben der Vorgabe eines positiven Rohsollstroms I_{q,REQ} des drehmomentbildenden Stroms kann auch ein negativer Rohsollstrom I_{q,REQ} des drehmomentbildenden Stroms vorgegeben werden, so z.B. zum Abbremsen der Synchronmaschine PMSM. Somit kann die drehmomentbildende Stromgrenze I_{q,MAX} sowohl positiv wie auch negativ mittels der ersten Begrenzungseinheit B2 vorgegeben werden.

Die Feldschwächungseinheit B9 (Figur 3) umfasst eine dritte Berechnungseinheit CU_3, die hier beispielhaft abhängig von dem Sollwert V_{d} der magnetfeldbildenden Spannung und von dem Sollwert V_{q} der drehmomentbildenden Spannung den Istwert m_{ACT} des Modulationsindex berechnet. In einem Verknüpfungspunkt VK5 wird eine Differenz zwischen einem Sollwert m_{MAX} des Modulationsindex und dem Istwert m_{ACT} des Modulationsindex ermittelt. Der Sollwert m_{MAX} des Modulationsindex wird typischerweise mit Werten zwischen 90% und 100% vorgegeben. Das aus der Differenz ermittelte erste Differenzsignal m_{Δ} kann einen negativen Wert umfassen, wenn der Istwert m_{ACT} des Modulationindex betragsmäßig größer ist als der Sollwert m_{MAX} des Modulationsindex, was beispielsweise bei der Anforderung einer steigenden Drehzahl, typischerweise über der Nenndrehzahl der Synchronmaschine PMSM, oder bei niedrigen Versorgungsspannungen des Stellglieds S, der Fall sein kann. Ein erster Regler B17, der als PI-Regler ausgebildet ist, erfasst das Differenzsignal m_{Δ} eingangsseitig und ermittelt abhängig von diesem eine magnetfeldbildende Zwischenrohsollstromkomponente I_{d,IntRefAux}. Die am PI-Regler B17 ausgangsseitig anliegende magnetfeldbildende Zwischenrohsollstromkomponente I_{d,IntRefAux} wird eingangsseitig einer Filtereinheit TP zugeführt, die bevorzugt als Tiefpassfilter ausgebildet ist. Die Filtereinheit TP filtert die magnetfeldbildende Zwischenrohsollstromkomponente I_{d,IntRefAux} im Sinne eines Tiefpass. Dadurch wird der abhängig von der magnetfeldbildenden Zwischenrohsollstromkomponente I_{d,IntRefAux} ermittelte Sollwert I_{d,REF} des magnetfeldbildenden Stroms für die unterlagerte Vorsteuerung B3 und dem Verknüpfungspunkt VK3 des unterlagerten d-Reglers B11 vorgefiltert. Ausgangsseitig erhält man dann die magnetfeldbildende Rohsollstromkomponente I_{d,RefAux}. Eine zweite Begrenzungseinheit B18 begrenzt die eingangsseitig anliegende magnetfeldbildende Rohsollstromkomponente I_{d,RefAux} betragsmäßig auf die magnetfeldbildende Stromgrenze I_{d,MAX} und ermittelt ausgangsseitig den begrenzten Sollwert I_{d,REF} des magnetfeldbildenden Stroms, die in Figur 1 der Vorsteuerung B3 und dem Verknüpfungspunkt VK3 zugeführt ist.

Zur Betrachtung der magnetfeldbildenden Stromgrenze I_{d,MAX} wird in diesem Zusammenhang auf eine Kippgrenze hingewiesen, die sich bei betragsmäßig steigendem Sollwert I_{d,REF} des magnetfeldbildenden Stroms aus den Beziehung F1, F2 und F3 in Figur 2 ergibt. Steigt der Sollwert I_{d,REF} des magnetfeldbildenden Stroms über die Kippgrenze, so kann mit dem Term *ω_{S}*·*L_{d}·I*_{*d*,*REF*} des Sollwerts V_{q} der drehmomentbildenden Spannung der Term *ω_{S}*·*ψ* des Sollwerts V_{q} der drehmomentbildenden Spannung der Beziehung F2 in Figur 2 und der betragsmäßige Anstieg des Sollwerts V_{d} der magnetfeldbildenden Spannung nicht mehr kompensiert werden, wodurch die absolute Spannung V_{dq} in F3 in Figur 2 betragsmäßig nicht mehr kleiner oder gleich der maximalen absoluten Spannung V_{dq,MAX} gehalten werden kann, sondern betragsmäßig ansteigt. Die daraus resultierende betragsmäßig ansteigende absolute Spannung V_{dq} würde zu einem steigenden Istwert m_{ACT} des Modulationindex nach Beziehung F8 in Figur 2 führen, der den Sollwert m_{MAX} des Modulationsindex überschreitet und mittels dem PI-Regler B17 eine höhere magnetfeldbildende Zwischenrohsollstromkomponente I_{d,IntRefAux} vorgeben. Abhängig von der magnetfeldbildende Zwischenrohsollstromkomponente I_{d,IntRefAux} würde die absolute Spannung V_{dq} betragsmäßig weiter ansteigen. Dieses Verhalten entspricht dem einer Mitkopplung und somit einer Regelungsinstabilität.

Die magnetfeldbildende Stromgrenze I_{d,MAX} ist somit bevorzugt derart vorgegeben, dass nicht nur die aus dem Sollwert I_{d,REF} des magnetfeldbildenden Stroms resultierende Stromwärmeverluste in der Synchronmaschine PMSM gering gehalten werden, sondern auch die der Kippgrenze zugeordnete Regelungsinstabilität durch die Begrenzung des Sollwert I_{d,REF} des magnetfeldbildenden Stroms auf die magnetfeldbildende Stromgrenze I_{d,MAX} verhindert wird.

Der Sollwert I_{d,REF} des magnetfeldbildenden Stroms wird einer ersten Berechnungseinheit CU_1 eingangsseitig zugeführt, die abhängig von diesem und dem ebenfalls eingangsseitig anliegenden maximalen absoluten Stroms I_{dq,MAX} einen drehmomentbildenden Rohstromgrenzwert I_{q,MaxAux} ermittelt. Die Ermittlung des drehmomentbildenden Rohstromgrenzwerts I_{q,MaxAux} erfolgt nach der Beziehung F7 in Figur 2. Solange der Sollwert I_{d,REF} des magnetfeldbildenden Stroms nicht durch die magnetfeldbildende Stromgrenze I_{d,MAX} mittels der zweiten Begrenzungseinheit B18 begrenzt wird, ist der Wert der drehmomentbildenden Stromgrenze I_{q,MAX} gleich dem drehmomentbildenden Rohstromgrenzwert I_{q,MaxAux} zugeordnet. Somit wird der maximale absolute Strom I_{dq,MAX} und somit der maximale Strom des Stellglieds S nach Beziehung F6 in Figur 2 nicht überschritten.

In einem weiteren Verknüpfungspunkt VK6 wird ein zweites Differenzsignal I_{d,Δ} aus einer Differenz zwischen der magnetfeldbildenden Rohsollstromkomponente I_{d,RefAux} und der magnetfeldbildende Stromgrenze I_{d,MAX} ermittelt.

Das zweite Differenzsignal I_{d,Δ} wird eingangsseitig einem zweiten Regler B19 zugeführt. Der zweite Regler B19 ist bevorzugt als PI-Regler ausgebildet und kann eingangsseitig einen Inverter umfassen, der das zweite Differenzsignal I_{d,Δ} invertiert. Der zweite PI-Regler B19 ermittelt abhängig von dem eingangsseitig anliegenden Differenzsignal I_{d,Δ} eine drehmomentbildende Hilfsstromkomponente I_{q,MaxMod}. Der zweite PI-Regler B19 kann dabei derart ausgebildet sein, dass er erst die drehmomentbildende Hilfsstromkomponente I_{q,MaxMod} ausgangsseitig ermittelt, wenn die magnetfeldbildende Rohsollstromkomponente I_{d,RefAux} betragsmäßig größer ist als die magnetfeldbildende Stromgrenze I_{d,MAX}. Andernfalls kann die drehmomentbildende Hilfsstromkomponente I_{q,MaxMod} mittels dem zweiten PI-Regler B19 ausgangsseitig mit einem Wert von 0 vorgegeben werden. In einer weiteren bevorzugten Ausbildung, könnte der als PI-Regler ausgebildete zweite Regler B19 einen Integrator-Reset Mechanismus umfassen, der den Integrator abhängig von geeigneten Eingangswerten zurücksetzt.

Die drehmomentbildende Hilfsstromkomponente I_{q,MaxMod} wird eingangsseitig dem als PI-Regler ausgebildeten ersten Regler B17 zugeführt. Neben dem Eingang für die drehmomentbildende Hilfsstromkomponente I_{q,MaxMod} umfasst der erste Regler B17 auch einen Eingang für die magnetfeldbildende Stromgrenze I_{d,MAX}. Der erste Regler B17 ist derart ausgebildet, dass bei einem Wert der drehmomentbildenden Hilfsstromkomponente I_{q,MaxMod} größer 0, der aktuelle I-Anteil des PI-Reglers B17 konstant gehalten wird, so dass keine weitere betragsmäßig unvorteilhafte Erhöhung der magnetfeldbildenden Zwischenrohsollstromkomponente I_{d,IntRefAux} abhängig von dem eingangsseitig anliegenden ersten Differenzsignal m_{Δ} ermittelt wird.

Der erste Regler B17 und der zweite Regler B19 sind beispielsweise als PI-Regler ausgebildet, können jedoch ebenso auch als ein anderer dem Fachmann für diesen Zweck als geeignet bekannte Regler ausgebildet sein.

Die drehmomentbildende Hilfsstromkomponente I_{q,MaxMod} wird einer zweiten Berechnungseinheit CU_2 eingangsseitig zugeführt. Die zweite Berechnungseinheit CU_2 zieht dabei betragsmäßig dem ebenfalls eingangsseitig anliegenden drehmomentbildenden Rohstromgrenzwert I_{q,MaxAux} den Wert der drehmomentbildende Hilfsstromkomponente I_{q,MaxMod} ab und ermittelt dadurch die drehmomentbildende Stromgrenze I_{q,MAX}. Der Wert der drehmomentbildende Stromgrenze I_{q,MAX} wird der ersten Begrenzungseinheit B2 in Figur 1 zugeführt, wodurch der vorgegebene Rohsollwert I_{q,REQ} des drehmomentbildenden Stroms begrenzt ist. Durch die zweite Berechnungseinheit CU_2 kann somit auch im Fall der Begrenzung des Sollwerts I_{d,REF} des magnetfeldbildenden Stroms auf die magnetfeldbildende Stromgrenze I_{d,MAX} die drehmomentbildende Stromgrenze I_{q,MAX} reduziert werden, so dass der im Feldschwächbetrieb typische Stromgrenzbetrieb mit dem eingeprägten maximalen absoluten Stroms I_{dq,MAX} und somit der Betrieb des Stellglieds S mit dem maximalen Strom verlassen wird. Somit wird nur der Sollwert I_{q,REF} des drehmomentbildenden Stroms vorgegeben, der auch tatsächlich für den jeweiligen Betrieb der Synchronmaschine PMSM erforderlich ist.

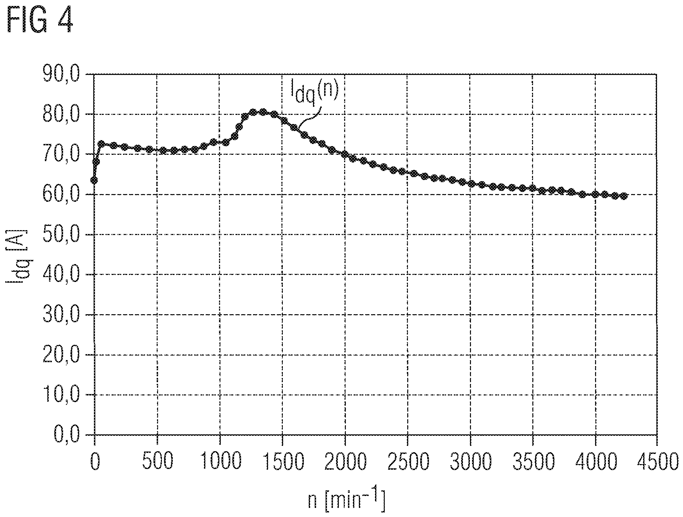

Eine Figur 4 zeigt den zeitlichen Verlauf des absoluten Stroms I_{dq} über der Drehzahl n der Synchronmaschine PMSM. Der zeitliche Verlauf basiert auf einer Messung einer permanenterregten Synchronmaschine PMSM wie sie beispielsweise in Lenksystemen von Kraftfahrzeugen eingesetzt wird. Die Synchronmaschine hat eine Nenndrehzahl von etwa 1000 min⁻¹. Ausgehend von einem vorgegebenen Rohsollwert I_{q,REQ} des drehmomentbildenden Stroms von 70A, steigert die Synchronmaschine PMSM ihre Drehzahl bei fast konstanten 70A bis zu einer Drehzahl von 1000 min⁻¹. In dem Drehzahlbereich unter der Nenndrehzahl von 1000 min⁻¹ wird durch die Feldschwächungseinheit B9 ein Sollwert I_{d,REF} des magnetfeldbildenden Stroms von 0 vorgegeben, d.h. der maximal mögliche Strom I_{dq,MAX} kann zur maximalen Drehmomentbildung der Synchronmaschine PMSM zur Verfügung gestellt werden.

Unter der Annahme, dass die Drehmomentanforderung einen Rohsollwert Rohsollwert I_{q,REQ} des drehmomentbildenden Stroms von 70A vorgibt und die Last des Antriebssystems derart ist, dass durch den resultierenden Drehmomentüberschuss das System beschleunigt, so steigt die Drehzahl weiter an. Ab etwa 1000 min⁻¹ wird der Feldschwächbetrieb durch die Feldschwächungseinheit B9 in Figur 1 vorgegeben. Ab dieser Drehzahl wird der Sollwert I_{d,REF} des magnetfeldbildenden Stroms betragsmäßig größer 0 vorgegeben, um dem Magnetfeld der Permanentmagneten des Rotors entgegen zu wirken. In dem Drehzahlbereich zwischen 1000 min⁻¹ und 1200 min⁻¹ kann noch ein relativ hohes Drehmoment von der Synchronmaschine PMSM bereitgestellt werden, ohne dass der Sollwert I_{d,REF} des magnetfeldbildenden Stroms seine Stromgrenze I_{d,MAX} erreicht. In einem Drehzahlbereich zwischen 1200 min¹ und 1500 min⁻¹ läuft die Synchronmaschine PMSM mittels des Stellgliedes S im Stromgrenzbetrieb bei etwa 80A, d.h. der absolute Strom I_{dq} ist gleich dem maximalen absoluten Strom I_{dq,MAX}, wobei sich der absolute Strom I_{dq} nach Beziehung F6 in Figur 2 aus einem vorgegebenen Sollwert I_{d,REF} und einem zu diesem Zeitpunkt maximalen Sollwert I_{q,MAX} des drehmomentbildenden Stroms zusammensetzt. Auch in diesem Drehzahlbereich erreicht der vorgegebene Sollwert I_{d,REF} des magnetfeldbildenden Stroms nicht seine vorgegebene Stromgrenze I_{d,MAX}.

Ab einer Drehzahl von 1500 min⁻¹ erreicht der Sollwert I_{d,REF} des magnetfeldbildenden Stroms die vorgegebene magnetfeldbildende Stromgrenze I_{d,MAX}. Der eingespeiste Strom I_{dq,MAX} von 80A würde ab einer Drehzahl von 1500 min⁻¹ weiter konstant fließen und das Stellglied S somit weiter im Stromgrenzebetrieb betrieben werden, wenn der zweite Regler B19 in Figur 3 zur Ermittlung der drehmomentbildenden Hilfsstromkomponente I_{q,MaxMod} nicht vorhanden wäre.

Dadurch dass die magnetfeldbildende Rohsollstromkomponente I_{d,RefAux} die magnetfeldbildende Stromgrenze I_{d,MAX} betragsmäßig überschreitet, wird die drehmomentbildende Hilfsstromkomponente I_{q,MaxMod} mittels dem zweiten Regler B19 betragsmäßig größer 0 vorgegeben und mittels der zweiten Berechnungseinheit CU_2 betragsmäßig von dem berechneten und zu diesem Zeitpunkt konstanten drehmomentbildenden Rohstromgrenzwert I_{q,MaxAux} abgezogen. Ab der Drehzahl von 1500 min⁻¹ sinkt somit der absolute Strom I_{dq} abhängig von der ermittelten drehmomentbildenden Hilfsstromkomponente I_{q,MaxMod}, weil die drehmomentbildende Stromgrenze I_{q,MAX} reduziert wird und somit der Sollwert I_{q,REF} des drehmomentbildenden Stroms auf diesen begrenzt wird. Durch diese Begrenzung sinkt der Drehmomentüberschuss, der das Antriebssystem inklusive Last beschleunigt hat, so dass bei etwa 4000 min⁻¹ ein stationärer Betriebspunkt erreicht wird. Aus Figur 4 ergibt sich ein maximaler Strom I_{dq} von 60 A.

## Patentansprüche

1. Vorrichtung zum Betreiben einer Synchronmaschine (PMSM) mit einem Stator, dem drei Wicklungsstränge zugeordnet sind, und einem Rotor, **gekennzeichnet dadurch, daß** die Vorrichtung ausgebildet ist
- einen Sollwert (I_{d,REF}) eines magnetfeldbildenden Stroms in einem mit dem Rotor der Synchronmaschine (PMSM) umlaufenden Koordinatensystem abhängig von einer magnetfeldbildenden Rohsollstromkomponente (I_{d,RefAux}) des rotorumlaufenden Koordinatensystems und einer magnetfeldbildenden Stromgrenze (I_{d,MAX}) des rotorumlaufenden Koordinatensystems zu ermitteln und zwar derart, dass der Sollwert (I_{d,REF}) des magnetfeldbildenden Stroms auf die magnetfeldbildende Stromgrenze (I_{d,max}) begrenzt wird, wobei die magnetfeldbildende Stromgrenze (I_{d,MAX}) betragsmäßig unter einer für die Synchronmaschine (PMSM) im Feldschwächbetrieb typischen Kippgrenze liegt und
- eine drehmomentbildende Stromgrenze (I_{q,MAX}) des rotorumlaufenden Koordinatensystems im Bereich der Begrenzung des Sollwerts (I_{d,REF}) des magnetfeldbildenden Stroms abhängig von der magnetfeldbildenden Rohsollstromkomponente (I_{d,RefAux}) und der magnetfeldbildenden Stromgrenze (I_{d,MAX}) betragsmäßig zu reduzieren, wobei
- die Vorrichtung einen ersten Regler (B17) umfasst, der dazu ausgebildet ist, abhängig von einem Sollwert (V_{d}) einer magnetfeldbildenden Spannung des rotorumlaufenden Koordinatensystems und einem Sollwert (V_{q}) einer drehmomentbildenden Spannung des rotorumlaufenden Koordinatensystems eine magnetfeldbildende Zwischenrohsollstromkomponente (I_{d,IntRefAux}) zu ermitteln, abhängig von der die magnetfeldbildende Rohsollstromkomponente (I_{d,RefAux}) ermittelt wird.

2. Vorrichtung nach Anspruch 1 umfassend eine Filtereinheit, die dazu ausgebildet ist, abhängig von der Zwischenrohsollstromkomponente (I_{d,IntRefAux}) die magnetfeldbildenden Rohsollstromkomponente (I_{d,RefAux}) zu ermitteln und zwar im Sinne einer Tiefpassfilterung.

3. Vorrichtung nach einem der vorstehenden Ansprüche umfassend eine zweite Begrenzungseinheit (B18), die dazu ausgebildet ist, den Sollwert (I_{d,REF}) des magnetfeldbildende Stroms auf die magnetfeldbildende Stromgrenze (Id,MAx) zu begrenzen.

4. Vorrichtung nach Anspruch 1 umfassend einen zweiten Regler (B19), der dazu ausgebildet ist, abhängig von der magnetfeldbildenden Stromgrenze (I_{d,MAX}) und der magnetfeldbildenden Rohsollstromkomponente (I_{d,RefAux}) eine drehmomentbildende Hilfsstromkomponente (I_{q,MaxMod}) zu ermitteln.

5. Vorrichtung nach Anspruch 4 in der der zweite Regler als PI-Regler ausgebildet ist.

6. Vorrichtung nach Anspruch 4 in der der zweite Regler als Funktionseinheit ausgebildet ist, die die drehmomentbildende Hilfsstromkomponente (I_{q,MaxMod}) im Sinne einer tabellarischen Ermittlung ermittelt.

7. Vorrichtung nach Anspruch 4, in der der erste Regler (B17) als PI-Regler ausgebildet ist und einen Eingang für die magnetfeldbildende Stromgrenze (I_{d,MAX}) und einen Eingang für die drehmomentbildende Hilfsstromkomponente (I_{q,MaxMod}) umfasst, wobei der PI-Regler derart ausgebildet ist, abhängig von der magnetfeldbildenden Stromgrenze (I_{d,MAX}) und der drehmomentbildenden Hilfsstromkomponente (I_{q,MaxMod}) einen gerade gültigen Integralanteil des PI-Reglers konstant zu halten.

8. Vorrichtung nach Anspruch 4 umfassend eine erste Berechnungseinheit (CU_1), die dazu ausgebildet ist, abhängig von dem Sollwert (I_{d,REF}) des magnetfeldbildenden Stroms und einem vorgegebenen maximalen absoluten Strom (I_{dq,MAX}), der den betragsmäßig maximalen Strom eines Stellglieds (S) repräsentiert, einen drehmomentbildenden Rohstromgrenzwert (I_{q,MaxAux}) zu ermitteln.

9. Vorrichtung nach Anspruch 4 oder 8 umfassend eine zweite Berechnungseinheit (CU_2), die dazu ausgebildet ist, abhängig von dem drehmomentbildenden Rohstromgrenzwert (I_{q,MaxAux}) und der drehmomentbildenden Hilfsstromkomponente (I_{q,MaxMod}) die drehmomentbildende Stromgrenze (I_{q,MAX}) zu ermitteln.

## Claims

1. Device for operating a synchronous machine (PMSM) with a stator, which is assigned three winding phases, and a rotor, **characterized in that** the device is designed
- to determine a setpoint value (I_{d,REF}) of a magnetic field-forming current in a coordinate system rotating with the rotor of the synchronous machine (PMSM), dependent on a magnetic field-forming raw setpoint current component (I_{d,RefAux}) of the rotor-circulating coordinate system and a magnetic field-forming current limit (I_{d,MAX}) of the rotor-circulating coordinate system, and to do so such that the setpoint value (I_{d,REF}) of the magnetic field-forming current is limited to the magnetic field-forming current limit (I_{d,max}), wherein the magnitude of the magnetic field-forming current limit (I_{d,MAX}) lies below a stability limit typical for the synchronous machine (PMSM) in the field weakening mode and
- to reduce the magnitude of a torque-forming current limit (I_{q,MAX}) of the rotor-circulating coordinate system in the region of the limitation of the setpoint value (I_{d,REF}) of the magnetic field-forming current, dependent on the magnetic field-forming raw setpoint current component (I_{d,RefAux}) and the magnetic field-forming current limit (I_{d,MAX}), wherein
- the device comprises a first controller (B17), which is designed to determine, dependent on a setpoint value (V_{d}) of a magnetic field-forming voltage of the rotor-circulating coordinate system and a setpoint value (V_{q}) of a torque-forming voltage of the rotor-circulating coordinate system, a magnetic field-forming intermediate raw setpoint current component (I_{d,IntRefAux}), dependent on which the magnetic field-forming raw setpoint current component (I_{d,RefAux}) is determined.

2. Device according to Claim 1, comprising a filter unit, which is designed to determine, dependent on the intermediate raw setpoint current component (I_{d,IntRefAux}), the magnetic field-forming raw setpoint current component (I_{d,RefAux}) and to do so by way of a low-pass filtering.

3. Device according to one of the preceding claims, comprising a second limiting unit (B18), which is designed to limit the setpoint value (I_{d,Ref}) of the magnetic field-forming current to the magnetic field-forming current limit (I_{d,MAX}) .

4. Device according to Claim 1, comprising a second controller (B19), which is designed to determine, dependent on the magnetic field-forming current limit (I_{d,MAX}) and the magnetic field-forming raw setpoint current component (I_{d,RefAux}), a torque-forming auxiliary current component (I_{q,MaxMod}).

5. Device according to Claim 4 in which the second controller is designed as a PI controller.

6. Device according to Claim 4 in which the second controller is designed as a functional unit which determines the torque-forming auxiliary current component (I_{q,MaxMod}) by way of a tabular determination.

7. Device according to Claim 4, in which the first controller (B17) is designed as a PI controller and comprises an input for the magnetic field-forming current limit (I_{d,MAX}) and an input for the torque-forming auxiliary current component (I_{q,MaxMod}) , wherein the PI controller is designed in such a way as to keep an integral component applicable at the time of the PI controller constant, dependent on the magnetic field-forming current limit (I_{d,Max}) and the torque-forming auxiliary current component (I_{q,MaxMod}) .

8. Device according to Claim 4 comprising a first calculating unit (CU_1), which is designed to determine, dependent on the setpoint value (I_{d,REF}) of the magnetic field-forming current and a predetermined maximum absolute current (I_{dq,MAX}), which represents the current of a maximum magnitude of the actuating element (S), a torque-forming raw current limit value (I_{q,MaxAux}) .

9. Device according to Claim 4 or 8 comprising a second calculating unit (CU_2), which is designed to determine, dependent on the torque-forming raw current limit value (I_{q,MaxAux}) and the torque-forming auxiliary current component (I_{q,MaxMod}) , the torque-forming current limit (I_{q,MAX}).

## Revendications

1. Dispositif de fonctionnement d'une machine synchrone (PMSM) comprenant un stator, auquel sont associés trois phases d'enroulement, et un rotor, **caractérisé en ce que** le dispositif est conçu
- pour déterminer une valeur de consigne (I_{d,REF}) d'un courant de formation de champ magnétique dans un système de coordonnées, tournant conjointement avec le rotor de la machine synchrone (PMSM), en fonction d'une composante de courant de consigne brute de formation de champ magnétique (I_{d,RefAux}) du système de coordonnées faisant tourner le rotor et d'une limite de courant de formation de champ magnétique (I_{d,MAX}) du système de coordonnées faisant tourner le rotor de telle sorte que la valeur de consigne (I_{d,REF}) du courant de formation de champ magnétique soit limitée à la limite de courant de formation de champ magnétique (I_{d,max}), la limite de courant de formation de champ magnétique (I_{d,MAX}) étant inférieure en valeur absolue à une limite d'inclinaison typique de la machine synchrone (PMSM) en mode d'affaiblissement de champ et
- pour réduire en valeur absolue une limite de courant de formation de champ magnétique (I_{q,MAX}) du système de coordonnées faisant tourner le rotor dans la région de limitation de la valeur de consigne (I_{D,REF}) du courant de formation de champ magnétique en fonction de la composante de courant de consigne brute de formation de champ magnétique (I_{d,RefAux}) et de la limite de courant de formation de champ magnétique (I_{d,MAX}),
- le dispositif comprend un premier régulateur (B17) qui est conçu pour déterminer, en fonction d'une valeur de consigne (V_{d}) d'une tension de formation de champ magnétique du système de coordonnées faisant tourner le rotor et d'une valeur de consigne (V_{q}) d'une tension de formation de couple du système de coordonnées tournant conjointement avec le rotor, une composante de courant de consigne brute intermédiaire de formation de champ magnétique (I_{d,IntRefAux}) en fonction de laquelle la composante de courant de consigne brute de formation de champ magnétique (I_{d,RefAux}) est déterminée.

2. Dispositif selon la revendication 1, comprenant une unité de filtrage, qui est conçue pour déterminer, c'est-à-dire au sens d'un filtrage passe-bas, la composante de courant de consigne brute de formation de champ magnétique (I_{d,RefAux}) en fonction de la composante de courant de consigne brute intermédiaire (I_{d,IntRefAux}).

3. Dispositif selon l'une des revendications précédentes comprenant une deuxième unité de limitation (B18) qui est conçue pour limiter la valeur de consigne (I_{d,REF}) du courant de formation de champ magnétique à la limite de courant de formation de champ magnétique (I_{d,MAX}).

4. Dispositif selon la revendication 1, comprenant un deuxième régulateur (B19) qui est conçu pour déterminer une composante de courant auxiliaire (I_{q,MaxMod}) en fonction de la limite de courant de formation de champ magnétique (I_{d,MAX}) et de la composante de courant de consigne brute de formation de champ magnétique (I_{d,RefAux}).

5. Dispositif selon la revendication 4, dans lequel le deuxième régulateur est conçu comme un régulateur PI.

6. Dispositif selon la revendication 4, dans lequel le deuxième régulateur est conçu comme une unité fonctionnelle qui détermine la composante de courant auxiliaire de formation de couple (I_{q,MaxMod}) au sens d'une détermination tabulaire.

7. Dispositif selon la revendication 4, dans lequel le premier régulateur (B17) est conçu comme un régulateur PI et comprend une entrée destinée à la limite de courant (I_{d,MAX}) et une entrée destinée à la composante de courant auxiliaire de formation de couple (I_{q,MaxMod}) , le régulateur PI étant conçu pour maintenir constante une partie intégrante actuellement valide du régulateur PI, en fonction de la limite de courant de formation de champ magnétique (I_{d,MAX}) et de la composante de courant auxiliaire de formation de couple (I_{q,MaxMod}).

8. Dispositif selon la revendication 4, comprenant une première unité de calcul (CU_1), qui est conçue pour déterminer une valeur limite de courant brut de formation de couple (I_{q.MaxAux}) en fonction de la valeur de consigne (I_{d,REF}) du courant de formation de champ magnétique et d'un courant maximum en valeur absolue prédéterminé (I_{dq,MAX}) qui représente le courant maximum en valeur absolue d'un actionneur (S).

9. Dispositif selon la revendication 4 ou 8, comprenant une deuxième unité de calcul (CU_2) qui est conçue pour déterminer la limite de courant de formation de couple (I_{q,MAX}) en fonction de la valeur limite de courant brut de formation de couple (I_{q,MaxAux}) et de la composante de courant auxiliaire de formation de couple (I_{q,MaxMod}) .
